# EUROPÄISCHE PATENTANMELDUNG

(11) **EP 1 956 670 A1**
(43) Veröffentlichungstag der Anmeldung: **13.08.2008**
(21) Anmeldenummer: 07033587.2
(22) Anmeldetag: 27.12.2007
(51) Int. Cl.: H01M 8/04, F02M 31/125

(54) **Modul zur thermischen Konditionierung von Brennstoff**

(30) Priorität: 08.02.2007 DE 102007006369
(71) Anmelder: Enerday GmbH, 82131 Stockdorf (DE)
(72) Erfinder: Lindermeir, Andreas, 38642 Goslar/Oker (DE); Budde, Jörn, 14471 Potsdam (DE); Günther, Norbert, 18311 Ribnitz-Damgarten (DE)
(74) Vertreter: Schumacher & Willsau

(57) **Zusammenfassung**

Die Erfindung betrifft ein Modul zur thermischen Konditionierung von Brennstoff, insbesondere für ein Brennstoffzellensystem, mit zumindest einem Peltierelement (16), wobei die Heiß- oder Kaltseite des Peltierelements thermisch leitend mit dem Brennstoff in Verbindung steht und die jeweils andere der Seiten des Peltierelements (16) thermisch leitend mit einem Umgebungsmedium in Verbindung steht.

Vorteilhafterweise ist dabei vorgesehen, dass das Modul einen Temperatursensor (30) zum Bestimmen einer Brennstofftemperatur und eine mit diesem verbundene elektronische Steuereinheit (20) zur Regelung der dem Peltierelement (16) zugeführten elektrischen Leistung aufweist, um den zu konditionierenden Brennstoff auf eine bestimmte Temperatur zu regeln.

Darüber hinaus ist vorteilhafterweise vorgesehen, dass das Peltierelement (32) dazu ausgelegt ist, soviel Wärmeenergie zu erzeugen, dass der Brennstoff verdampfbar ist.

Darüber hinaus betrifft die Erfindung ein Brennstoffzellensystem mit solch einem Modul und ein Verfahren zur Regelung solch eines Moduls.

## Beschreibung

Die Erfindung betrifft ein Modul zur thermischen Konditionierung von Brennstoff, insbesondere für ein Brennstoffzellensystem, mit zumindest einem Peltierelement, wobei die Heiß- oder Kaltseite des Peltierelements thermisch leitend mit dem Brennstoff in Verbindung steht und die jeweils andere der Seiten des Peltierelements thermisch leitend mit einem Umgebungsmedium in Verbindung steht.

Darüber hinaus betrifft die Erfindung ein Verfahren zur thermischen Konditionierung von Brennstoff, insbesondere in der Brennstoffzuleitung eines Brennstoffzellensystems, mit den Schritten: Erzeugen eines thermischen Energiestroms zwischen einer Heiß- oder Kaltseite eines zumindest einen Peltierelements; und Erzeugen eines thermischen Energiestroms zwischen der jeweils anderen der Seiten des Peltierelements und einem Umgebungsmedium.

Brennstoffzellensysteme zum Betrieb mit flüssigen Kohlenwasserstoffen, wie beispielsweise Methanol, Benzin oder Diesel, benötigen eine Reformierungseinheit, welche ein Gemisch aus Brennstoff und Luft zu einem wasserstoffhaltigen Reformat umsetzt, mit dem die Brennstoffzelle betrieben werden kann. Wird als Brennstoff ein flüssiger Kohlenwasserstoff eingesetzt, werden zum Betrieb der Reformierungseinheit Fördereinrichtungen, wie beispielsweise Pumpen, verwendet, welche die Versorgung der Einzelkomponenten mit Brennstoff sicherstellen. In Abhängigkeit von der gewählten Anwendung, dem Einsatzgebiet und den entsprechenden Umgebungsbedingungen können dabei Brennstofftemperaturen von deutlich unter 0°C bis zu +60°C erreicht werden. Soll das Brennstoffzellensystem beispielsweise als Stromerzeuger für eine Klimaanlage im Fahrzeugbereich eingesetzt werden, ist das Brennstoffzellensystem für Umgebungstemperaturen bis +40°C auszulegen. Im Bereich der Einbauposition der Fördereinrichtungen können allerdings durch Stauwärme und direkte Sonneneinstrahlung deutlich höhere Temperaturen (bis zu +60°C) auftreten.

Werden keine Maßnahmen getroffen, um die Erwärmung des Brennstoffs zu vermeiden, können sich im Bereich der Brennstoffzuführleitung und der Fördereinrichtung Blasen aus verdampftem Brennstoff bilden. Die massive Volumenexpansion während der Verdampfung führt dazu, dass kein konstanter Brennstoffmassendurchfluss von der Fördereinheit bereitgestellt wird, sondern eine pulsierende Förderung resultiert.

Dies kann bei Verwendung von Dosierpumpen zu einem vollständigen Ausfall der Fördereinheit führen, da diese oberhalb eines bestimmten Dampfgehalts in der Brennstoffzuleitung den Brennstoff nicht kontinuierlich ansaugen kann, so dass der Massendurchfluss auf Null absinkt.

Bei Verwendung von Brennstoff mit höheren Anteilen an leicht siedenden Komponenten wie beispielsweise Methanol oder Benzin, besteht die Möglichkeit, die Brennstofftemperatur soweit abzusenken, dass innerhalb des Brennstoffzuführsystems keine Verdampfung auftritt. Für Benzin sind dabei Temperaturen unterhalb von ca. 30 °C notwendig, um die Dampfblasenbildung weitestgehend zu unterdrücken.

Aus der DE 199 04 202 A1 ist ein Modul und ein Verfahren mit den Merkmalen der Oberbegriffe der Ansprüche 1, 5, 8 und 9 bekannt.

Die Aufgabe der vorliegenden Erfindung besteht darin, das gattungsgemäße Modul zur thermischen Konditionierung von Brennstoff und das gattungsgemäße Verfahren derart weiterzubilden, dass eine verbesserte thermische Konditionierung von Brennstoff beziehungsweise eine funktionelle Erweiterung der thermischen Konditionierung erzielt werden kann.

Diese Aufgabe wird durch die unabhängigen Ansprüche gelöst.

Vorteilhafte Ausgestaltungen und Weiterbildungen ergeben sich aus den abhängigen Ansprüchen.

Das erfindungsgemäße Modul baut auf dem gattungsgemäßen Stand der Technik dadurch auf, dass das Modul einen Temperatursensor zum Bestimmen einer Brennstofftemperatur und eine mit diesem verbundene elektronische Steuereinheit zur Regelung der dem Peltierelement zugeführten elektrischen Leistung aufweist, um den zu konditionierenden Brennstoff auf eine bestimmte Temperatur zu regeln. Dadurch kann die Förderung des Brennstoffs derart optimiert werden, dass selbst eine Veränderung der stoffspezifischen Kennwerte, wie beispielsweise der Viskosität oder der Dichte, welche mit einer Brennstofftemperaturveränderung einhergehen, keinen Einfluss auf die Exaktheit der Massendurchflusssteuerung der Fördereinrichtung hat. Insbesondere für Brennstoffzellenanwendungen ist die Einstellung der Fördermenge in Kenntnis eines konstanten Brennstoffmassenstroms notwendig um den Betrieb innerhalb der gewünschten Parameter sicherzustellen. Durch die Temperaturistwertfeststellung und die entsprechende Nachregelung der elektrischen Leistung (incl. deren Polarität) des Peltierelements ermöglicht die Erfindung einen absolut exakten Brennstoffmassendurchfluss unabhängig von der Umgebungstemperatur und der Brennstoffausgangstemperatur. Ohne die erfindungsgemäße Regelung mit Temperaturistwertfeststellung würde die Kenntnis der tatsächlich geförderten Menge an Brennstoff fehlen. Soll dagegen ein Brennstoff eingesetzt werden, der bei niedrigen Temperaturen erstarrt (z.B. Dieselkraftstoff) ermöglicht die Erfindung auch hier eine thermische Vorkonditionierung in Form einer Regelung. Durch die drastische Erhöhung der Viskosität im Bereich niedriger Temperaturen würden sich ansonsten auch hier Probleme ergeben, wenn konventionelle Fördereinrichtungen verwendet werden sollen und anhand dieser ein konstanter und exakter Massendurchfluss temperaturunabhängig eingestellt werden soll. Für diese Zwecke kann die elektronische Steuereinheit die Polarität des Peltierelements ändern, so dass je nachdem welcher Anschluss ein höheres Potential aufweist, die Kalt- oder Heißseite des Peltierelements in thermischer Verbindung zum Brennstoff steht. Insgesamt lässt sich somit durch das erfindungsgemäße Modul nicht nur ein pulsationsfreier Massendurchfluss, sondern darüber hinaus ein absolut konstanter Massendurchfluss einstellen, der unabhängig von temperaturbedingten Änderungen in den stoffspezifischen Größen ist. Somit sind auch konstante Fördermengen bei stark unterschiedlichen Umgebungs- und Brennstofftemperaturen einstellbar. Dies hat darüber hinaus den Vorteil, dass durch diesen konstanten Massendurchfluss konventionelle und damit kostengünstige Fördereinrichtungen, wie beispielsweise Hubkolben-Dosierpumpen verwendet werden können.

Darüber hinaus kann die Erfindung dadurch weitergebildet sein, dass der Temperatursensor stromabwärts des zu konditionierenden Brennstoffs angeordnet ist. Dies hat den Vorteil, dass ein einziger Temperatursensor zum Feststellen des Temperaturistwertes für die Regelung ausreicht. Ansonsten wären mehrere Temperatursensoren erforderlich, beispielsweise ein Temperatursensor stromaufwärts des Moduls und ein Umgebungstemperatursensor.

Außerdem kann die Erfindung dadurch weitergebildet sein, dass das Modul einen mit Kühlrippen versehenen Kühlkörper aufweist, der die Übertragung thermischer Energie zwischen dem Peltierelement und dem Umgebungsmedium verbessert.

Hierdurch kann zusätzlich neben der elektrisch zugeführten Leistung Wärme aus der Umgebung in den Brennstoff eingebracht werden. Dadurch kann mehr Wärmeenergie in das Medium eingekoppelt werden, als dem Peltierelement an elektrischer Leistung zugeführt wird. Ist eine Abfuhr von Wärme erforderlich, dann kann durch den Kühlkörper und der damit verbundenen Flächenvergrößerung auch in verbesserter Weise Wärme an die Umgebung abgegeben werden.

Diese Effekte lassen sich weiter dadurch verstärken, dass das Modul ein Gebläse aufweist, um die Übertragung thermischer Energie zwischen dem Peltierelement und dem Umgebungsmedium zu verbessern.

Das erfindungsgemäße Modul baut ferner auf dem gattungsgemäßen Stand der Technik dadurch auf, dass das Peltierelement dazu ausgelegt ist, soviel Wärmeenergie zu erzeugen, dass der Brennstoff verdampfbar ist. Dies führt zu einer funktionellen Erweiterung, so dass das Modul zur Verdampfung von Brennstoff einsetzbar ist und separate Vorrichtungen, die ansonsten für die Verdampfung erforderlich wären, weggelassen werden können. Reformierungseinheiten und Nachbrenner, die in Brennstoffzellensystemen zu Einsatz kommen, weisen in der Regel eingangsseitig eine Verdampfungseinheit zum Verdampfen des zugeführten Brennstoffes auf. Diese Verdampfung kann nun durch das erfindungsgemäße Modul übernommen werden, so dass ohne zusätzliche Komponenten nachzurüsten, das Modul auch in funktionell erweiterter Weise eingesetzt werden kann.

Diese Ausführung kann dadurch weitergebildet sein, dass das Modul einen mit Kühlrippen versehenen Kühlkörper aufweist, der die Wärmeübertragung zwischen dem Peltierelement und dem Umgebungsmedium verbessert. Durch den Kühlkörper wird zusätzlich zur elektrisch zugeführten Leistung noch Wärme aus der Umgebung in den Brennstoff eingebracht, so dass höhere Wirkungsgrade als bei vergleichbaren Widerstandsheizern möglich sind. Somit kann der Brennstoff mit vergleichsweise geringer Leistung verdampft werden.

Mit dem erfindungsgemäßen Brennstoffzellensystem und dem erfindungsgemäßen Verfahren zur thermischen Konditionierung von Brennstoff lassen sich die vorstehend beschriebenen Vorteile in übertragener Weise erreichen.

Bevorzugte Ausführungsformen der Erfindung werden nachfolgend mit Bezug auf die begleitenden Zeichnungen beispielhaft erläutert.

Es zeigen:
- Figur 1: das erfindungsgemäße Modul gemäß einem ersten Ausführungsbeispiel; und
- Figur 2: das erfindungsgemäße Modul gemäß einem zweiten Ausführungsbeispiel.

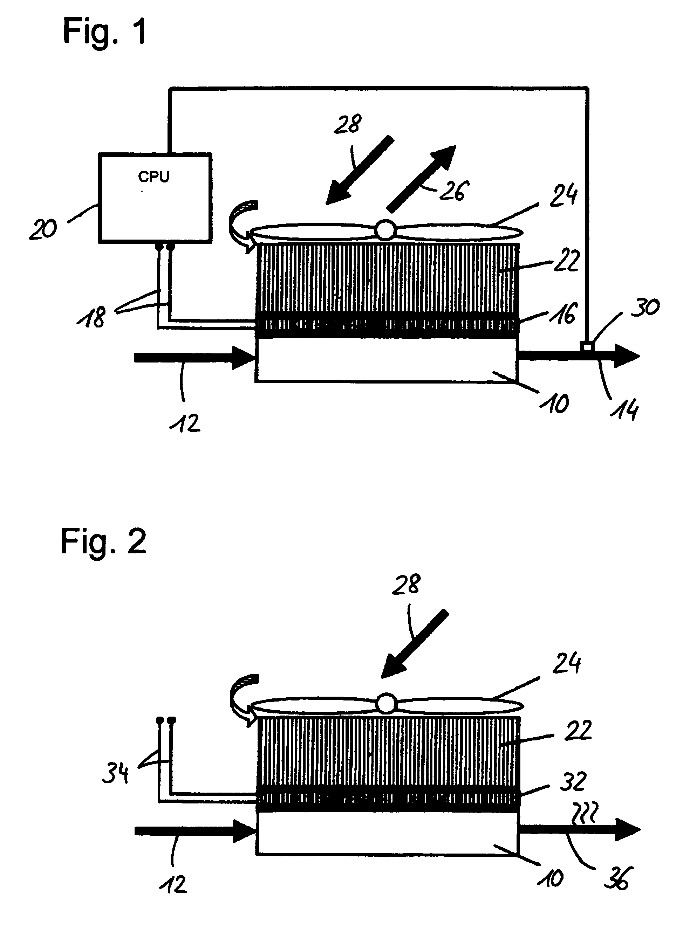

Figur 1 zeigt das erfindungsgemäße Modul gemäß einem ersten Ausführungsbeispiel. Das in Figur 1 dargestellte Modul umfasst einen Brennstoffzuführabschnitt 10, der kanalartig ausgebildet ist und im Inneren Brennstoff führt. Dieser Brennstoffzuführabschnitt 10 ist in der Brennstoffzuleitung eines Brennstoffzellensystems angeordnet, d.h. einstückig mit der übrigen Brennstoffzuführleitung verbunden oder als Teilabschnitt in die übrige Brennstoffzuführleitung eingesetzt. Über diese Brennstoffzuführleitung werden nicht dargestellte Komponenten eines Brennstoffzellensystems, wie beispielsweise eine Reformierungseinheit und/oder ein Nachbrenner mit Brennstoff versorgt. Ferner ist stromabwärts des Brennstoffzuführabschnittes 10 in der Brennstoffzuleitung eine Fördereinrichtung, wie beispielsweise eine Hubkolbenpumpe, zum Ansaugen des Brennstoffs vorgesehen. Die Pfeile 12 und 14 kennzeichnen den dem Brennstoffzuführabschnitt 10 zu- und abgeführten Brennstoff und geben somit die Strömungsrichtung des Brennstoffs an. Ein Peltierelement 16 ist einstückig mit dem Brennstoffzuführabschnitt 10 verbunden oder als separates Teil angrenzend zu diesem angeordnet. Hinsichtlich der thermischen Verbindung von Brennstoffzuführabschnitt 10 und Peltierelement 16 fungiert der Brennstoffzuführabschnitt ferner als Wärmetauscher, der thermische Energie zwischen dem Peltierelement 16 und dem im Brennstoffzuführabschnitt 10 strömenden Brennstoff, d.h. dem zu konditionierenden Brennstoff, überträgt. Das Peltierelement 16 weist elektrische Leitungen 18 auf, die zu einer elektronischen Steuereinheit 20 des Moduls führen. Abhängig von der angelegten Spannung, dem daraus resultierenden Stromfluss und der Polung des Peltierelements 16 über die elektrischen Leitungen 18 kühlt sich entweder die dem Brennstoffzuführabschnitt 10 zugewandte Seite des Peltierelements 16 ab und die dem Brennstoffzuführabschnitt 10 abgewandte Seite erwärmt sich oder es erwärmt sich in umgekehrter Weise die dem Brennstoffzuführabschnitt 10 zugewandte Seite und die dem Brennstoffzuführabschnitt 10 abgewandte Seite kühlt sich ab. Die abgekühlte Seite wird als Kaltseite des Peltierelements 16 und die erwärmte Seite als Heißseite des Peltierelements 16 bezeichnet. Somit kann je nach Steuerung der Polung und Spannung der elektrischen Leitungen 18 der Brennstoff im Brennstoffzuführabschnitt 10 erwärmt oder abgekühlt werden. Auf der dem Brennstoffzuführabschnitt 10 abgewandten Seite des Peltierelements 16 ist ein mit Kühlrippen versehener Kühlkörper 22 angeordnet. Auf der dem Brennstoffzuführabschnitt 10 abgewandten Seite des Kühlkörpers 22 schließt ein Gebläse 24 an. Für den Fall, dass die dem Kühlkörper 22 zugewandte Seite des Peltierelements 16 die Heißseite ist, d.h. ein Betriebszustand vorherrscht, in dem der im Brennstoffzuführabschnitt 10 geführte Brennstoff gekühlt werden soll, gibt der Kühlkörper 22 die von der Heißseite des Peltierelements 16 abgegebene Wärme besser an das Umgebungsmedium, dies ist in der Regel Luft, ab, so dass die Kühlung des Brennstoffs unterstützt wird. Dieser Effekt wird des Weiteren durch den Betrieb des Gebläses 24 unterstützt, so dass in diesem Betriebszustand Wärmeenergie abgegeben werden kann, wie durch den Pfeil 26 dargestellt. Bei umgekehrter Polung des Peltierelements 16 wird die Heißseite an der dem Brennstoffzuführabschnitt 10 zugewandten Seite des Peltierelements und die Kaltseite an der dem Kühlkörper 22 zugewandet Seite ausgebildet. In diesem Betriebszustand wird zusätzlich die Wärmeenergie aus dem Umgebungsmedium über das Gebläse 24 und den Kühlkörper 22 aufgenommen und dem Brennstoffzuführabschnitt 10 über das Peltierelement 16 zugeführt, was dazu führt, dass dem Brennstoffzuführabschnitt 10 mehr Wärmeenergie vom Umgebungsmedium zugeführt werden kann (siehe Pfeil 28), als das Peltierelement 16 von alleine aufbringen könnte. Für die exakte Regelung der Brennstofftemperatur des zu konditionierenden Brennstoffs ist stromabwärts des Brennstoffzuführabschnittes oder im Bereich des stromabwärtigen Ausganges des Brennstoffzuführabschnittes 10 ein Temperatursensor 30 vorgesehen, welcher mit der elektronischen Steuereinheit 20 elektrisch verbunden ist. Der Temperatursensor 30 bestimmt den Temperaturistwert des vom Brennstoffzuführabschnitt 10 abgeführten Brennstoffs 14, so dass die elektronische Steuereinheit 20 abhängig vom Temperaturistwert die Regelung der an die elektrischen Leitungen 18 angelegten Polung und der Spannung bzw. des Stroms durchführen kann, um den im Brennstoffzuführabschnitt 10 geführten, zu konditionierenden Brennstoff auf einen vorgegebenen Temperatursollwert zu regeln. Alternativ zum Temperatursensor 30 können auch mehrere Temperatursensoren vorgesehen sein, beispielsweise kann die Regelung auch basierend auf der Umgebungstemperatur und der Temperatur des zugeführten Brennstoffes 12 durchgeführt werden.

Figur 2 zeigt das erfindungsgemäße Modul gemäß einem zweiten Ausführungsbeispiel. In diesem zweiten Ausführungsbeispiel werden nur Elemente beschrieben, die sich vom ersten Ausführungsbeispiel unterscheiden. Das in Figur 2 dargestellte zweite Ausführungsbeispiel unterscheidet sich vom ersten Ausführungsbeispiel zunächst darin, dass kein Temperatursensor vorgesehen ist. Das Peltierelement 32 des zweiten Ausführungsbeispiels wird über elektrische Leitungen 34 mit elektrischer Energie versorgt. Die grundsätzliche Funktionsweise entspricht der des Peltierelements 16 des ersten Ausführungsbeispiels, jedoch unterscheidet sich das Peltierelement 32 vom Peltierelement 16 dadurch, dass das Peltierelement 32 dazu ausgelegt ist, derart viel Wärmeenergie zu erzeugen, dass der im Brennstoffzuführabschnitt 10 geführte Brennstoff verdampft wird und als verdampfter Brennstoff 36 vom Brennstoffzuführabschnitt 10 austritt. Durch die zusätzliche Wärmeeintragung 28 über den Kühlkörper 22 hat dieses Modul einen besseren Wirkungsgrad als vergleichbare Widerstandsheizer die bisher zur Verdampfung von Brennstoff vorgesehen waren. Ein Temperatursensor ist in diesem Ausführungsbeispiel nicht dringend erforderlich, da es hier nicht notwendig ist eine Regelung durchzuführen, sondern es für die Zwecke der Verdampfung ausreicht, das Peltierelement 32 über die elektrischen Leitungen 34 mit einer ausreichend hohen Spannung zu beaufschlagen, die ein Verdampfen des Brennstoffs bei jeder Temperatur sicherstellt. Jedoch kann ein Temperatursensor wie im ersten Ausführungsbeispiel sowie eine elektronische Steuereinheit 20 vorgesehen sein, um einen Verdampfungszustand per Regelung sicherzustellen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Brennstoffzuführabschnitt
- 12: dem Brennstoffzuführabschnitt zugeführter Brennstoff
- 14: vom Brennstoffzuführabschnitt abgeführter Brennstoff
- 16: Peltierelement
- 18: elektrische Leitungen
- 20: elektronische Steuereinheit
- 22: Kühlkörper
- 24: Gebläse
- 26: abgeführte Wärmeenergie
- 28: zugeführte Wärmeenergie
- 30: Temperatursensor
- 32: Peltierelement
- 34: elektrische Leitungen
- 36: verdampfter Brennstoff

## Patentansprüche

1. Modul zur thermischen Konditionierung von Brennstoff, insbesondere für ein Brennstoffzellensystem, mit zumindest einem Peltierelement (16), wobei die Heiß- oder Kaltseite des Peltierelements thermisch leitend mit dem Brennstoff in Verbindung steht und die jeweils andere der Seiten des Peltierelements (16) thermisch leitend mit einem Umgebungsmedium in Verbindung steht, **dadurch gekennzeichnet, dass** das Modul einen Temperatursensor (30) zum Bestimmen einer Brennstofftemperatur und eine mit diesem verbundene elektronische Steuereinheit (20) zur Regelung der dem Peltierelement (16) zugeführten elektrischen Leistung aufweist, um den zu konditionierenden Brennstoff auf eine bestimmte Temperatur zu regeln.

2. Modul gemäß Anspruch 2, **dadurch gekennzeichnet, dass** der Temperatursensor (30) stromabwärts des zu konditionierenden Brennstoffs angeordnet ist.

3. Modul gemäß einem der vorhergehenden Ansprüche, **dadurch gekennzeichnet, dass** das Modul einen mit Kühlrippen versehenen Kühlkörper (22) aufweist, der die Übertragung thermischer Energie zwischen dem Peltierelement (16) und dem Umgebungsmedium verbessert.

4. Modul gemäß einem der vorhergehenden Ansprüche, **dadurch gekennzeichnet, dass** das Modul ein Gebläse (24) aufweist, um die Übertragung thermischer Energie zwischen dem Peltierelement (16) und dem Umgebungsmedium zu verbessern.

5. Modul zur thermischen Konditionierung von Brennstoff, insbesondere für ein Brennstoffzellensystem, mit zumindest einem Peltierelement (32), wobei die Heiß- oder Kaltseite des Peltierelements (32) thermisch leitend mit dem Brennstoff in Verbindung steht und die jeweils andere der Seiten des Peltierelements (32) thermisch leitend mit einem Umgebungsmedium in Verbindung steht, **dadurch gekennzeichnet, dass** das Peltierelement (32) dazu ausgelegt ist, soviel Wärmeenergie zu erzeugen, dass der Brennstoff verdampfbar ist.

6. Modul gemäß Anspruch 5, **dadurch gekennzeichnet, dass** das Modul einen mit Kühlrippen versehenen Kühlkörper (22) aufweist, der die Wärmeübertragung zwischen dem Peltierelement (32) und dem Umgebungsmedium verbessert.

7. Brennstoffzellensystem mit einem Modul gemäß einem der vorhergehenden Ansprüche.

8. Verfahren zur thermischen Konditionierung von Brennstoff, insbesondere in der Brennstoffzuleitung eines Brennstoffzellensystems, mit den Schritten:
- Erzeugen eines thermischen Energiestroms zwischen einer Heiß- oder Kaltseite eines zumindest einen Peltierelements (16); und
- Erzeugen eines thermischen Energiestroms zwischen der jeweils anderen der Seiten des Peltierelements (16) und einem Umgebungsmedium,
**gekennzeichnet durch** Regeln einer Zufuhr der elektrischen Leistung zum Peltierelement (16) abhängig von einer Temperatur des Brennstoffs derart, dass der zu konditionierende Brennstoff auf eine bestimmte Temperatur geregelt wird.

9. Verfahren zur thermischen Konditionierung von Brennstoff, insbesondere in der Brennstoffzuleitung eines Brennstoffzellensystems, mit den Schritten:
- Erzeugen eines thermischen Energiestroms zwischen einer Heiß- oder Kaltseite eines zumindest einen Peltierelements (32); und
- Erzeugen eines thermischen Energiestroms zwischen der jeweils anderen der Seiten des Peltierelements (32) und einem Umgebungsmedium,
**gekennzeichnet durch** Verdampfen von Brennstoff **durch** Zufuhr einer entsprechend hohen elektrischen Leistung zum Peltierelement (32).
